# FASCICULE DE BREVET EUROPEEN

(11) **EP 3 599 821 B1**
(45) Date de publication et mention de la délivrance du brevet: **12.05.2021**
(21) Numéro de dépôt: 18715196.4
(22) Date de dépôt: 20.03.2018
(51) Int. Cl.: A01G 17/04, A01G 17/14

(54) **DISPOSITIF D'ACCROCHAGE DE FILS POUR LES VIGNES**
DRAHTBEFESTIGUNGSVORRICHTUNG FÜR WEINSTÖCKE
WIRE-ATTACHMENT DEVICE FOR GRAPEVINES

(30) Priorité: 20.03.2017 FR 1752262
(43) Date de publication de la demande: 05.02.2020
(73) Titulaire: Gautherot, Chloé, 10110 Buxières-sur-Arce (FR); Gautherot, Philippe, 10110 Buxières sur Arce (FR)
(72) Inventeur: Gautherot, Chloé, 10110 Buxières-sur-Arce (FR); Gautherot, Philippe, 10110 Buxières sur Arce (FR)
(74) Mandataire: Oudin, Stéphane
(86) Numéro de dépôt international: PCT/FR2018/000060
(87) Numéro de publication internationale: WO 2018/172631

(56) Documents cités:
- EP-A1- 1 103 177
- EP-A2- 2 915 936
- DE-A1-102004 011 778
- FR-A1- 2 983 226
- FR-A1- 3 019 577

## Description

### Domaine technique

La présente invention concerne un dispositif d'accrochage destiné à maintenir le long d'un poteau des fils tendus et permettant le relevage desdits fils, ledit dispositif étant notamment utilisé pour le palissage de la vigne.

### Technique antérieure

Dans de nombreuses applications il est nécessaire de maintenir le long d'un poteau des fils tendus qui sont soumis à des forces horizontales et verticales tendant à les écarter dudit poteau. L'une de ces applications est le palissage de la vigne où les forces tendant à écarter les fils sont générées par le vent et la végétation palissée et serrée entre des fils disposés de part et d'autre dudit poteau.

Dans le domaine des dispositifs d'accrochage de fils de palissage de vigne, on connaît déjà des dispositifs constitués de clous plantés dans des poteaux en bois ou encore de vis fixées dans des poteaux métalliques, les fils de palissage étant alors posés sur lesdits clous et vis et retenus uniquement par la partie supérieure de la tête desdits clous et vis. Ces solutions sont certes économiques mais elles présentent de nombreux inconvénients. En effet, compte tenu de la configuration, les fils sont juste retenus par la tête des clous ou vis et peuvent facilement se dégager desdits clous ou vis et s'écarter des poteaux, sous l'effet du vent par exemple. Par ailleurs, les clous ou vis peuvent se dégrader, se casser ou être arraché par le passage des machines notamment, tomber en partie sur le sol et polluer le terroir car ils sont de manière générale métalliques et donc non biodégradables. De plus, les parties tombées au sol peuvent endommager les pneus des tracteurs enjambeurs ou des machines à vendanger. Enfin, les clous ou vis cassés (environ 15%) doivent être remplacés tous les ans, ce qui représentent une perte de temps et d'argent non négligeables pour l'exploitation viticole.

Pour résoudre certains de ces inconvénients, on connaît également des poteaux métalliques munis de pattes en forme générale de L permettant de recevoir et de maintenir les fils de palissage, lesdites pattes étant obtenues à partir d'une encoche réalisée par emboutissage à l'emporte-pièce. Toutefois, cette technique présente également plusieurs inconvénients. En effet, elle n'est applicable que sur des poteaux métalliques et les pattes réalisées par emboutissage présentent des arêtes vives et tranchantes qui ont tendance à couper par abrasion les fils de palissage, qui sont classiquement en ficelle ou en matière plastique. Enfin, on sait qu'au fur et à mesure de la pousse de la vigne palissée, il est nécessaire de relever les fils pour maintenir le rang de ladite vigne afin de ne pas encombrer les espaces entre les rangées. Or avec cette configuration, les pattes sont réalisées en atelier et ne permettent pas d'adapter leur position verticale en fonction de la taille initiale de la vigne. Enfin, lorsque les pattes sont cassées, les poteaux doivent obligatoirement être remplacés par un semblable ce qui représenté un coût unitaire non négligeable.

On connait également des dispositifs d'accrochage de fils manquants de fiabilité tels que ceux décrits dans les demandes de brevets FR 2 983 226 et FR 3 019 577.

### Exposé de l'invention

Le but de la présente invention est donc de pallier les inconvénients précédemment cités et de proposer une solution alternative aux dispositifs d'accrochages de fils tendus entre des poteaux connus qui soit pérenne, solide, facile à mettre en œuvre, quel que soit le type de poteau, tout en permettant un relevage à la main des fils, aisé et rapide. La présente invention est en outre écologique afin notamment de ne pas polluer le sol.

A cet égard, il est donc proposé un dispositif d'accrochage agencé pour maintenir un fil tendu le long d'un poteau, comportant un organe porte-fil comprenant :
- une semelle rigide comprenant au moins une face avant, une face arrière globalement plane agencée pour être mise en appui le long du poteau, et
- un organe d'accrochage rigide en forme globale de crochet solidaire au moins en partie de la face avant de ladite semelle,
ledit dispositif d'accrochage étant remarquable en ce que l'organe porte-fil comprend une languette élastiquement flexible s'étendant de manière inclinée vers l'avant dudit porte-fil depuis l'extrémité supérieure de la face avant de sa semelle et en direction dudit organe d'accrochage, l'organe d'accrochage et la languette déterminant un premier évidement agencé pour recevoir le fil et dont la section transversale est en forme globale de U refermé, et en ce qu'il comporte un collier de serrage agencé pour solidariser ledit organe porte-fil le long du poteau de manière à ce que la face arrière de sa semelle soit en appui contre la face externe du poteau et que l'axe longitudinal de ladite face arrière soit globalement perpendiculaire à l'axe longitudinal du fil.

De manière préférée, l'organe d'accrochage comprend, d'une part, une première portion en forme globale de U et muni d'une aile avant, d'une aile arrière plus courte que ladite aile avant et solidaire au moins en partie de la face avant de la semelle, et d'une âme joignant lesdites ailes avant et arrière, ces dernières s'étendant vers la partie supérieure du porte-fil et, d'autre part, une deuxième portion s'étendant de l'extrémité libre de l'aile avant de la première portion en direction de l'avant du porte-fil.

Le porte-fil comprend avantageusement un gousset s'étendant perpendiculairement à la face arrière de la semelle vers l'avant dudit porte-fil depuis les faces avant respectives de l'organe d'accrochage et de la semelle et reliant la deuxième portion dudit organe d'accrochage et l'extrémité inférieure de la face avant de la semelle. Ce gousset permet d'accroître la rigidité dudit organe d'accrochage.

La face avant dudit gousset est de préférence globalement arrondie et ne comporte aucun angle vif.

De manière avantageuse, le gousset est disposé le long d'un bord longitudinal du porte-fil.

La semelle, l'aile arrière de la première portion de l'organe d'accrochage et la languette déterminent un deuxième évidement permettant le déplacement de l'extrémité libre de ladite languette lorsque cette dernière fléchit.

Le collier de serrage passe au travers du deuxième évidement pour assurer la solidarisation dudit porte-fil contre et le long du poteau.

Selon un mode de réalisation préféré, le porte-fil comporte un orifice traversant la semelle de part en part entre ses faces avant et arrière, ledit orifice permettant le passage du collier de serrage pour assurer la solidarisation dudit porte-fil contre et le long du poteau.

Le collier de serrage est de préférence du type collier desserrable ou non pour le serrage de câbles électriques tel que les colliers RILSAN ou COLSON ou similaires.

Selon un mode de réalisation préféré, la face arrière de la semelle comporte des éléments antidérapants.

### Description sommaire des figures

D'autres avantages et caractéristiques ressortiront mieux de la description qui va suivre de plusieurs variantes d'exécution, données à titre d'exemples non limitatifs, d'un dispositif d'accrochage conforme à l'invention, en référence aux dessins dans lesquels :
- la figure 1 est une vue avant en perspective d'un dispositif d'accrochage selon l'invention mis en place le long d'un poteau,
- la figure 2 est une vue de côté agrandie du dispositif d'accrochage de la figure 1,
- les figures 3 à 5 sont des vues de côté du dispositif d'accrochage de la figure 1 à différentes étapes de la mise en place d'un fil dans ledit dispositif d'accrochage selon l'invention.

### Meilleure manière de réaliser l'invention technique

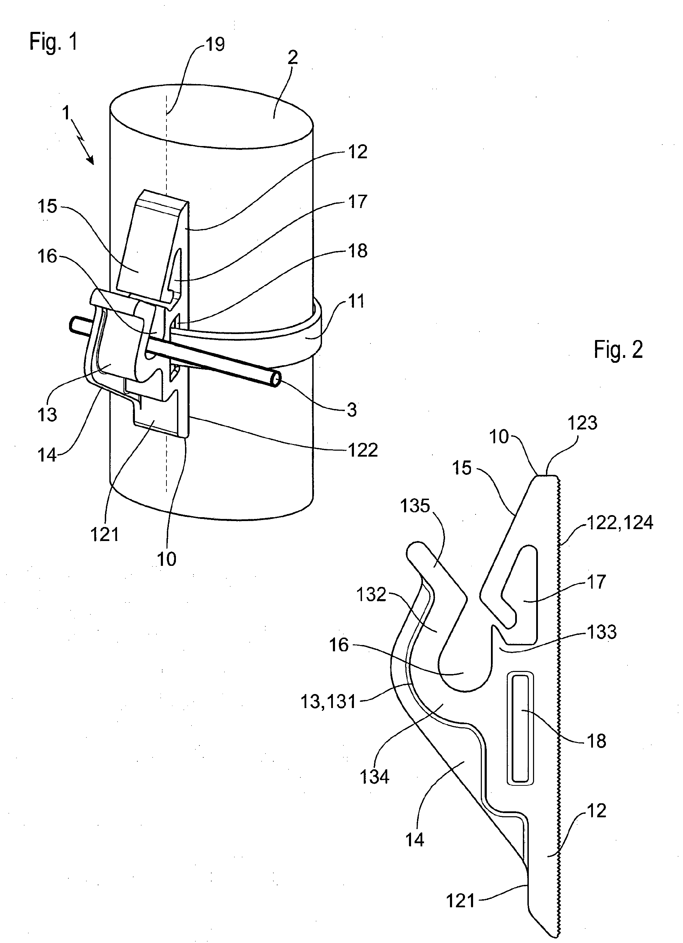

Conformément à la figure 1, le dispositif d'accrochage 1 selon l'invention est destiné à maintenir le long de poteaux 2 un fil 3 tendu notamment de part et d'autre d'un rang de culture, non représenté, du type vigne par exemple.

Dans ce qui suit, on va décrire un dispositif d'accrochage 1 comportant un porte-fil 10 agencé pour être solidarisé par un collier de serrage 11 contre et le long d'un poteau 2 vertical, de section globalement ronde, de sorte à maintenir un fil 3 tendu horizontalement, ledit porte-fil 10 étant alors positionné sensiblement vertical. Il va de soi que le porte-fil 10 pourra être un peu incliné et/ou fixé sur un poteau 2 également plus ou moins incliné et/ou de toute autre section, les termes tel que, par exemple, vertical, horizontal, supérieur ou encore inférieur seront alors à adapter.

En référence aux figures 1 et 2, le dispositif d'accrochage 1 comporte donc un porte-fil 10 agencé pour être solidarisé par un collier de serrage 11 contre et le long d'un poteau 2 vertical.

Ledit porte-fil 10 comprend une semelle 12 rigide comportant une face avant 121, une face arrière 122 globalement plane agencée pour être mise en contact contre le poteau 2 et une face périphérique 123 joignant lesdites faces avant et arrière 121,122.

On désigne ici par "arrière" un élément ou une partie d'un élément du porte-fil 10 selon l'invention situé du côté du poteau 2 lorsque ledit porte-fil 10 est solidarisé sur ce dernier et par "avant" un élément ou une partie d'un élément du porte-fil 10 situé du côté opposé.

De même, on désigne ici par "supérieur(e)" un élément ou une partie d'un élément du porte-fil 10 selon l'invention situé en haut lorsque ledit porte-fil 10 est solidarisé sur le poteau 2, conformément à la figure 1, et par "inférieur (e) " un élément ou une partie d'un élément du porte-fil 10 situé en bas.

La face arrière 122 comporte de préférence des éléments antidérapants 124 tels que, par exemple, des stries ou encore des crans, pour garantir le maintien en position du porte-fil 10 le long du poteau 2 grâce à l'action du collier de serrage 11.

Le porte-fil 10 comporte en outre au moins un organe d'accrochage 13 rigide en forme globale de crochet et comprenant une première portion 131 en forme globale de U et muni d'une aile avant 132, d'une aile arrière 133 plus courte que ladite aile avant 132 et solidaire au moins en partie de la face avant 121 de la semelle 12, et d'une âme 134 joignant lesdites ailes avant 132 et arrière 133, ces dernières s'étendant vers la partie supérieure du porte-fil 10, et une deuxième portion 135 s'étendant de l'extrémité libre de l'aile avant 132 de la première portion 131 en direction de l'avant du porte-fil 10.

Pour accroitre la rigidité de l'organe d'accrochage 13, le porte-fil 10 comprend un gousset 14 s'étendant perpendiculairement à la face arrière 122 de la semelle 12 depuis les faces avant respectives de l'organe d'accrochage 13 et de la semelle 12 et reliant la deuxième portion 135 dudit organe d'accrochage 13, de préférence son extrémité libre, et l'extrémité inférieure de la face avant 121 de la semelle 12.

De manière avantageuse, la face avant dudit gousset 14 est globalement arrondie et ne comporte aucun angle vif (Cf. figure 2) pour servir de guide et éviter tout accrochage avec les fils 3 lors du relevage de ces derniers.

Le porte-fil 10 comporte également une languette 15 élastiquement flexible s'étendant de manière inclinée vers l'avant dudit porte-fil 10 depuis l'extrémité supérieure de la face avant 121 de sa semelle 12 et en direction de la jonction entre la première portion 131 et la deuxième portion 135 de son organe d'accrochage 13.

Ainsi avec cette configuration du porte-fil 10, l'organe d'accrochage 13 et la languette 15 déterminent un premier évidement 16 dont la section transversale est en forme globale de U. Toutefois, pour garantir le maintien en place du fil 3 dans le porte-fil 10 (Cf. figure 1), ledit premier évidement 16 a avantageusement une section transversale est en forme globale de U refermé. Pour ce faire, ladite première portion 131 de l'organe d'accrochage 13 est telle que l'extrémité de son aile avant 132 opposée à l'âme 134 se resserre vers son aile arrière 133, et la languette 15 s'étend au-delà de ladite aile arrière 133.

De plus, la deuxième portion 135 de l'organe d'accrochage 13 et la languette 15 constituent alors des faces inclinées permettant de guider un fil 3 vers le premier évidement 16 lors de sa mise en place.

Par ailleurs, la semelle 12, l'aile arrière 133 de la première portion 131 de l'organe d'accrochage 13 et la languette 15 déterminent un deuxième évidement 17 permettant le déplacement de l'extrémité libre de ladite languette 15 lorsque cette dernière fléchit en se repliant contre la semelle 12 lors notamment de la mise en place d'un fil 3 sur le porte-fil 10, comme décrit ci-après.

Toutefois, selon une variante "extrême" de réalisation du porte-fil 10 non représentée, ce deuxième évidement 17 peut également servir au passage du collier de serrage 11 assurant la solidarisation dudit porte-fil 10 contre et le long du poteau 2.

Pour assurer la solidarisation du porte-fil 10 contre et le long du poteau 2, le collier de serrage 11 pourra également être solidarisé du porte-fil 10 par toute technique appropriée telle que, par exemple, le collage, le soudage ou encore le rivetage, sans sortir du cadre de la présente invention.

Cependant, selon le mode de réalisation préféré représenté sur les figures, le porte-fil 10 comporte un orifice 18 traversant la semelle 12 de part en part entre ses faces avant 121 et arrière 122, ledit orifice 18 permettant le passage du collier de serrage 11 pour assurer la solidarisation dudit porte-fil 10 contre et le long du poteau 2 (Cf. figure 1).

Ainsi, en référence aux figures 1 à 5, pour accrocher un fil 3 dans le dispositif d'accrochage 1 selon l'invention on procède de la manière suivante.

Tout d'abord, on solidarise le porte-fil 10 du dispositif d'accrochage 1 sur un poteau 2 à l'aide du collier de serrage 11 conformément à la figure 1, autrement dit, ledit porte-fil 10 est alors maintenu en position par le collier de serrage 11 de manière à ce que la face arrière 122 de sa semelle 12 soit en appui contre la face externe du poteau 2 et que l'axe longitudinal 19 de ladite face arrière 122 soit globalement perpendiculaire à l'axe longitudinal du fil 3, c'est-à-dire que l'angle entre ledit axe longitudinal 19 et l'axe du fil 3 est compris entre 75 et 105°.

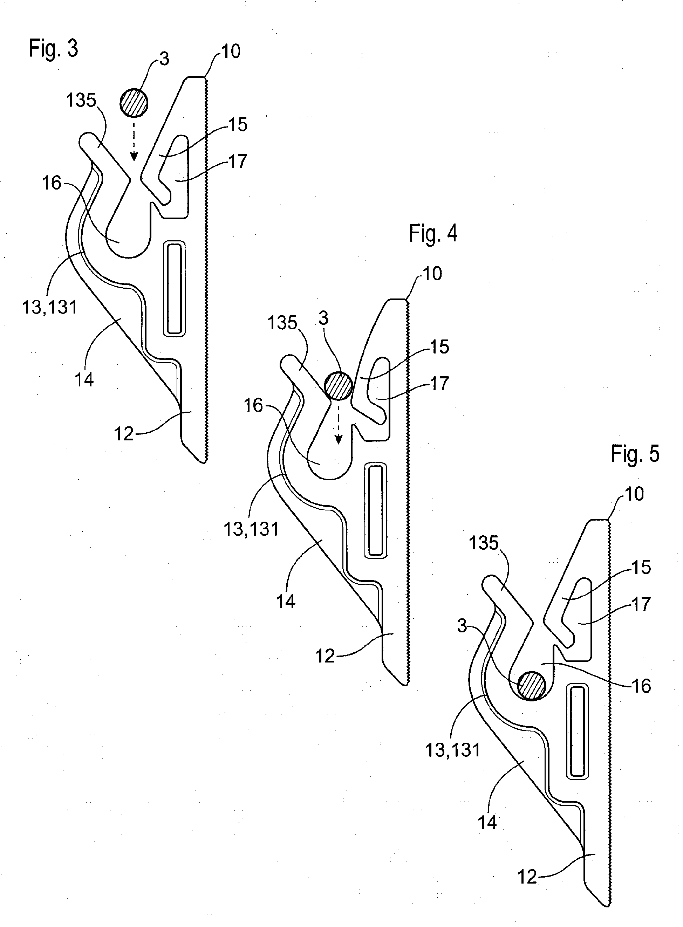

Ensuite, on présente un fil 3 au-dessus de la deuxième portion 135 de l'organe d'accrochage 13 et de la languette 15 (Cf. figure 3) puis on descend ledit fil 3 suivant la direction indiquée par la flèche, jusqu'à ce que le fil 3 vienne au contact de la deuxième portion 135 de l'organe d'accrochage 13 et de la languette 15.

En référence à la figure 4, on continue alors à descendre le fil 3 en exerçant une pression vers le bas suivant la direction indiquée par la flèche de manière à ce que la languette 15 fléchit en se repliant contre la semelle 12 pour permettre le passage du fil 3.

Enfin, en référence à la figure 5, on continue encore à descendre le fil 3 en exerçant une pression vers le bas suivant la direction indiquée par la flèche de manière à ce que le fil 3 s'engage entièrement dans le premier évidement 16.

Une fois le fil 3 dans le premier évidement 16, la languette 15 revient à sa place initiale de sorte à resserrer la partie supérieure dudit premier évidement 16 afin de garantir le maintien en place du fil 3 dans le porte-fil 10 (Cf. figure 5) en évitant que le fil 3 ne s'échappe trop facilement du premier évidement 16.

En outre, le collier de serrage 11 du dispositif d'accrochage 1 est de préférence du type collier desserrable ou non pour le serrage de câbles électriques tel que, par exemple, les colliers RILSAN ou COLSON.

On comprend bien que de tels colliers de serrage 11 permettent de solidariser les porte-fils 10 quel que soit le type de poteau.

Les éléments constitutifs du dispositif d'accrochage 1 selon l'invention, à savoir le porte-fil 10 et le collier de serrage 11, sont avantageusement réalisés à partir d'une matière non oxydante, biodégradable et non polluante.

Lesdits porte-fil 10 et collier de serrage 11 seront donc de préférence réalisé en matière synthétique polymère du type polyamide telle que, par exemple, le polycaprolactame (PA6) et/ou polyoxyméthylène (POM). Ce type de matière a également comme avantage d'être isolante électriquement.

Par ailleurs, le porte-fil 10 et le collier de serrage 11 pourront également être réalisés à partir d'une matière 100% végétale afin d'éviter tout risque de pollution du sol notamment.

De plus, le porte-fil 10 est avantageusement réalisé par moulage et ne présente pas d'arêtes tranchantes susceptibles d'endommager voire de sectionner le fil 3 tendu.

En référence avec la figure 1, pour des raisons évidentes de réduction du prix des moules, le gousset 14 est avantageusement disposé le long d'un bord longitudinal du porte-fil 10 selon l'invention.

### Possibilité d'application industrielle

Comme décrit précédemment, le dispositif d'accrochage 1, selon l'invention, s'applique plus particulièrement au maintien le long d'un poteau 2 des fils 3 tendus pour le palissage des rangs de vigne, car ledit dispositif d'accrochage 1 permet le relevage desdits fils 3 au fur et à mesure de la croissance de ladite vigne. Il va de soi que le dispositif d'accrochage 1 peut également être utilisé pour maintenir le long d'un poteau 2 des fils 3 tendus d'un tout autre type tel que, par exemple, des fils conducteurs d'une clôture électrique.

Enfin, il est clair que la présente invention ne se limite pas à la seule forme d'exécution de ce dispositif d'accrochage 1 ; elle en embrasse, au contraire, toutes les variantes de réalisation et d'application respectant le même principe.

## Revendications

1. Dispositif d'accrochage (1) agencé pour maintenir un fil (3) tendu le long d'un poteau (2), comportant un organe porte-fil (10) comprenant :
• une semelle (12) rigide comprenant au moins une face avant (121), une face arrière (122) globalement plane agencée pour être mise en appui le long du poteau (2), et
• un organe d'accrochage (13) rigide en forme globale de crochet solidaire au moins en partie de la face avant (121) de ladite semelle (12),
ledit dispositif d'accrochage (1) étant **caractérisé en ce que** l'organe porte-fil (10) comprend une languette (15) élastiquement flexible s'étendant de manière inclinée vers l'avant dudit porte-fil (10) depuis l'extrémité supérieure de la face avant (121) de sa semelle (12) et en direction dudit organe d'accrochage (13), l'organe d'accrochage (13) et la languette (15) déterminant un premier évidement (16) agencé pour recevoir le fil (3) et dont la section transversale est en forme globale de U refermé, et **en ce qu'**il comporte un collier de serrage (11) agencé pour solidariser ledit organe porte-fil (10) le long du poteau (2) de manière à ce que la face arrière (122) de sa semelle (12) soit en appui contre la face externe du poteau (2) et que l'axe longitudinal (19) de ladite face arrière (122) soit globalement perpendiculaire à l'axe longitudinal du fil (3).

2. Dispositif d'accrochage (1) selon la revendication 1 **caractérisé en ce que** l'organe d'accrochage (13) comprend, d'une part, une première portion (131) en forme globale de U et muni d'une aile avant (132), d'une aile arrière (133) plus courte que ladite aile avant (132) et solidaire au moins en partie de la face avant (121) de la semelle (12), et d'une âme (134) joignant lesdites ailes avant (132) et arrière (133), ces dernières s'étendant vers la partie supérieure du porte-fil (10) et, d'autre part, une deuxième portion (135) s'étendant de l'extrémité libre de l'aile avant (132) de la première portion (131) en direction de l'avant du porte-fil (10).

3. Dispositif d'accrochage (1) selon la revendication 2 **caractérisé en ce que** le porte-fil (10) comprend un gousset (14) s'étendant perpendiculairement à la face arrière (122) de la semelle (12) depuis les faces avant respectives de l'organe d'accrochage (13) et de la semelle (12) et reliant la deuxième portion (135) dudit organe d'accrochage (13) et l'extrémité inférieure de la face avant (121) de la semelle (12).

4. Dispositif d'accrochage (1) selon la revendication 3 **caractérisé en ce que** la face avant dudit gousset (14) est globalement arrondie et ne comporte aucun angle vif.

5. Dispositif d'accrochage (1) selon l'une quelconque des revendications 3 ou 4 **caractérisé en ce que** le gousset (14) est disposé le long d'un bord longitudinal du porte-fil (10).

6. Dispositif d'accrochage (1) selon l'une quelconque des revendications 2 à 5 **caractérisé en ce que** la semelle (12), l'aile arrière (133) de la première portion (131) de l'organe d'accrochage (13) et la languette (15) déterminent un deuxième évidement (17) permettant le déplacement de l'extrémité libre de ladite languette (15) lorsque cette dernière fléchit.

7. Dispositif d'accrochage (1) selon la revendication 6 **caractérisé en ce que** le collier de serrage (11) passe au travers du deuxième évidement pour assurer la solidarisation dudit porte-fil contre et le long du poteau.

8. Dispositif d'accrochage (1) selon l'une quelconque des revendications 1 à 6 **caractérisé en ce que** le porte-fil (10) comporte un orifice (18) traversant la semelle (12) de part en part entre ses faces avant (121) et arrière (122), ledit orifice (18) permettant le passage du collier de serrage (11) pour assurer la solidarisation dudit porte-fil (10) contre et le long du poteau (2).

9. Dispositif d'accrochage (1) selon l'une quelconque des revendications 1 à 8 **caractérisé en ce que** le collier de serrage (11) est du type collier desserrable ou non pour le serrage de câbles électriques.

10. Dispositif d'accrochage (1) selon l'une quelconque des revendications 1 à 9 **caractérisé en ce que** la face arrière (122) de la semelle (12) comporte des éléments antidérapants (124).

## Patentansprüche

1. Befestigungsvorrichtung (1), dafür ausgelegt, einen Draht (3) zu halten, gespannt entlang eines Pfostens (2), umfassend ein Drahthalterungsorgan (10), Folgendes umfassend:
• eine steife Sohle (12), umfassend wenigstens eine Vorderseite (121), eine im Wesentlichen flache Rückseite (122), dafür ausgelegt, entlang des Pfostens (2) aufzuliegen, und
• ein steifes Befestigungsorgan (13), im Wesentlichen in Hakenform, solidarisch wenigstens teilweise mit der Vorderseite (121) der Sohle (12),
wobei die Befestigungsvorrichtung (1) **dadurch gekennzeichnet ist, dass** das Drahthalterungsorgan (10) eine elastisch flexible Lasche (15) umfasst, sich auf geneigte Art zur Vorderseite der Drahthalterung (10) erstreckend von der oberen Extremität der Vorderseite (121) der Sohle (12) und in Richtung des Befestigungsorgans (13), wobei das Befestigungsorgan (13) und die Lasche (15) eine erste Aussparung (16) bestimmen, dafür ausgelegt, den Draht (3) aufzunehmen, und deren Querschnitt im Wesentlichen eine U-Form aufweist, und **dadurch,** dass sie eine Schlauchklemme (11) umfasst, dafür ausgelegt, das Drahthalterungsorgan (10) längs des Pfostens (2) solcherart zu solidarisieren, dass die Rückseite (122) seiner Sohle (12) an der Außenseite des Pfostens (2) aufliegt und dass die Längsachse (19) der Rückseite (122) im Wesentlichen senkrecht zu der Längsachse des Drahtes (3) verläuft.

2. Befestigungsvorrichtung (1) nach Anspruch 1, **dadurch gekennzeichnet, dass** das Befestigungsorgan (13) einerseits einen ersten Abschnitt (131) umfasst, im Wesentlichen eine U-Form aufweisend und ausgestattet mit einem vorderen Flügel (132), einem hinteren Flügel (133), kürzer als der vordere Flügel (132) und wenigstens teilweise solidarisch mit der Vorderseite (121) der Sohle (12), und einem Kern (134), den vorderen (132) mit dem hinteren Flügel (133) verbindend, wobei sich letztere zum oberen Teil der Drahthalterung (10) erstrecken, und andererseits einen zweiten Abschnitt (135), sich von der freien Extremität des vorderen Flügels (132) des ersten Abschnitts (131) in Richtung der Vorderseite der Drahthalterung (10) erstreckend.

3. Befestigungsvorrichtung (1) nach Anspruch 2, **dadurch gekennzeichnet, dass** die Drahthalterung (10) ein Knotenblech (14) umfasst, sich senkrecht zu der Rückseite (122) der Sohle (12) erstreckend von den entsprechenden Vorderseiten des Befestigungsorgans (13) und der Sohle (12) aus und den zweiten Abschnitt (135) des Befestigungsorgans (13) mit der unteren Extremität der Vorderseite (121) der Sohle (12) verbindend.

4. Befestigungsvorrichtung (1) nach Anspruch 3, **dadurch gekennzeichnet, dass** die Vorderseite des Lochblechs (14) im Wesentlichen gerundet ist und keine scharfen Kanten umfasst.

5. Befestigungsvorrichtung (1) nach einem der Ansprüche 3 oder 4, **dadurch gekennzeichnet, dass** das Lochblech (14) entlang einer Längskante der Drahthalterung (10) angeordnet ist.

6. Befestigungsvorrichtung (1) nach einem der Ansprüche 2 bis 5, **dadurch gekennzeichnet, dass** die Sohle (12), der hintere Flügel (133) des ersten Abschnitts (131) des Befestigungsorgans (13) und die Lasche (15) die zweite Aussparung (17) bestimmen, die Deplatzierung der freien Extremität der Lasche (15) ermöglichend, wenn letztere durchhängt.

7. Befestigungsvorrichtung (1) nach Anspruch 6, **dadurch gekennzeichnet, dass** die Schlauchklemme (11) die zweite Aussparung durchquert, um die Solidarisierung der Drahthalterung an und entlang dem Pfosten sicherzustellen.

8. Befestigungsvorrichtung (1) nach einem der Ansprüche 1 bis 6, **dadurch gekennzeichnet, dass** die Drahthalterung (10) eine Öffnung (18) umfasst, die Sohle (12) von einem Ende zum anderen durchquerend zwischen ihrer Vorder- (121) und Rückseite (122), wobei die Öffnung (18) das Durchqueren der Schlauchklemme (11) ermöglicht, um die Solidarisierung der Drahthalterung (10) an und entlang dem Pfosten (2) sicherzustellen.

9. Befestigungsvorrichtung (1) nach einem der Ansprüche 1 bis 8, **dadurch gekennzeichnet, dass** die Schlauchschelle (11) vom Typ einer lockerbaren oder nicht lockerbaren Schelle zum Klemmen von elektrischen Kabeln ist.

10. Befestigungsvorrichtung (1) nach einem der Ansprüche 1 bis 9, **dadurch gekennzeichnet, dass** die Rückseite (122) der Sohle (12) rutschfeste Elemente (124) umfasst.

## Claims

1. Attachment device (1) arranged to keep a wire (3) taut along a post (2), including a wire holder (10) member comprising:
• a rigid base (12) comprising at least one front face (121), one generally flat rear face (122) arranged to be supported along the post (2), and
• a rigid attachment member (13) generally with the shape of a hook at least partially secured to the front face (121) of said base (12),
said attachment device (1) being **characterised in that** the wire holder (10) member comprises an elastically flexible tongue (15) extending in an inclined manner towards the front of said wire holder (10) from the upper end of the front face (121) of the base (12) thereof and in the direction of said attachment member (13), the attachment member (13) and the tongue (15) determining a first recess (16) arranged to receive the wire (3) and of which the transversal cross-section is generally in the shape of a closed U, and **in that** it includes a clamping collar (11) arranged to secure said wire holder (10) member along the post (2) such that the rear face (122) of the base (12) thereof is supported against the outer face of the post (2) and that the longitudinal axis (19) of said rear face (122) is generally perpendicular to the longitudinal axis of the wire (3).

2. Attachment device (1) according to claim 1 **characterised in that** the attachment member (13) comprises, on the one hand, a first portion (131) generally in the shape of a U and provided with a front wing (132), a rear wing (133) shorter than said front wing (132) and at least partially secured to the front face (121) of the base (12), and a core (134) joining said front (132) and rear (133) wings, the latter extending towards the upper portion of the wire holder (10) and, on the other hand, a second portion (135) extending from the free end of the front wing (132) of the first portion (131) in the direction of the front of the wire holder (10).

3. Attachment device (1) according to claim 2 **characterised in that** the wire holder (10) comprises a gusset (14) extending perpendicularly to the rear face (122) of the base (12) from the respective front faces of the attachment member (13) and the base (12) and connecting the second portion (135) of said attachment member (13) and the lower end of the front face (121) of the base (12).

4. Attachment device (1) according to claim 3 **characterised in that** the front face of said gusset (14) is generally rounded and includes no sharp angle.

5. Attachment device (1) according to any one of claims 3 or 4 **characterised in that** the gusset (14) is disposed along a longitudinal edge of the wire holder (10) .

6. Attachment device (1) according to any one of claims 2 to 5 **characterised in that** the base (12), the rear wing (133) of the first portion (131) of the attachment member (13) and the tongue (15) determine a second recess (17) allowing the movement of the free end of said tongue (15) when the latter bends.

7. Attachment device (1) according to claim 6 **characterised in that** the clamping collar (11) passes through the second recess to ensure the securing of said wire holder against and along the post.

8. Attachment device (1) according to any one of claims 1 to 6 **characterised in that** the wire holder (10) includes an orifice (18) passing through the base (12) from one side to the other between the front (121) and rear (122) faces thereof, said orifice (18) allowing the passage of the clamping collar (11) to ensure the securing of said wire holder (10) against and along the post (2).

9. Attachment device (1) according to any one of claims 1 to 8 **characterised in that** the clamping collar (11) is of the collar type which can be unclamped or not for the clamping of electrical cables.

10. Attachment device (1) according to any one of claims 1 to 9 **characterised in that** the rear face (122) of the base (12) includes non-slip elements (124).
